Europäisches Patentamt

European Patent Office

Office européen des brevets

(19)

(11) Veröffentlichungsnummer: **0 233 637**

**A2**

## (12) EUROPÄISCHE PATENTANMELDUNG

(21) Anmeldenummer: **87102264.6**

(22) Anmeldetag: **17.02.87**

(51) Int. Cl.4: **C05F 9/02 , B65G 15/44 , B65G 15/52**

(30) Priorität: **19.02.86 DE 3605258**

(43) Veröffentlichungstag der Anmeldung:
**26.08.87 Patentblatt 87/35**

(84) Benannte Vertragsstaaten:
**AT CH DE LI NL**

(71) Anmelder: **Neumann, Georg**
**Parkweg 27**
**D-2807 Achim(DE)**

(72) Erfinder: **Neumann, Georg**
**Parkweg 27**
**D-2807 Achim(DE)**

(74) Vertreter: **Eisenführ & Speiser**
**Martinistrasse 24**
**D-2800 Bremen 1(DE)**

(54) **Verfahren und Vorrichtung zum Kompostieren fester und flüssiger organischer Abfälle.**

(57) Zum Kompostieren fester und flüssiger organischer Abfälle, insbesondere pflanzlicher Feststoffabfälle, Tierdung, Flüssigmist, Klärschlamm o.dgl. durch aerobe Fermentation unter Zufuhr von Luft oder Sauerstoff zum Erzielen wiederverwendbarer fester Düngemittel werden die festen und flüssigen organischen Abfälle in Intervallen durchmischt und während der Durchmischung Luft oder Sauerstoff zugeführt. Die Durchmischung und Belüftung erfolgt mittels eines Bandelevators, der mindestens ein mittels einer Antriebseinrichtung umlaufendes Förderband aufweist, auf dessen Band-Außenfläche von dieser abstehende Mitnehmer angeordnet sind. Der Bandelevator wird durch das Abfallgemisch gefahren und reißt mit den Mitnehmern Teile des Abfallgemisches empor, so daß diese Teile im oberen Teil belüftet, mit Zuschlagstoffen versehen und durcheinandergewirbelt werden können. Infolge der optimalen Belüftung und Durchwirbelung werden anaerobe Bereich innerhalb der Rottemasse vermieden und die Verrottungszeit erheblich verringert.

Fig. 1

## Verfahren und Vorrichtung zum Kompostieren fester und flüssiger organischer Abfälle

Die Erfindung bezieht sich auf ein Verfahren zum Kompostieren fester und flüssiger organischer Abfälle, insbesondere pflanzlicher Feststoffabfälle, Tierdung, Flüssigmist, Klärschlamm o.dgl. durch aerobe Fermentation, wobei die festen und flüssigen organischen Abfälle unter Zufuhr von Luft oder Sauerstoff in wiederverwendbare feste Düngemittel umgesetzt werden sowie auf eine Vorrichtung zur Durchführung des Verfahrens.

Es ist bekannt, feste und flüssige organische Abfälle wie Garten-und Küchenabfälle, Gülle, Klärschlamm, tierischen Dung und pflanzliche Rückstände wie Stroh, Astholz o.dgl. zu vermischen und im Heißrottevorgang bzw. mittels aerober Fermentation zu kompostieren, um daraus organischen Feststoffdünger mit möglichst hohen, wasserunlöslichen Stickstoffverbindungen als Endprodukt zu erzielen. Die bekannten Vorrichtungen verwenden Mischtrommeln, Mischpflügel und Verklappungskammern zum Durchmischen der Abfälle, um für eine aerobe Heißfermentation die nötige Belüftung zu gewährleisten. Der damit verbundene technische Aufwand ist sehr groß und infolge der Konsistenz der Abfälle kann nur eine geringe Abfallmasse bearbeitet werden, was die Wirtschaftlichkeit dieser bekannten Vorrichtungen herabsetzt.

Darüber hinaus wird bei den bekannten Zwangsmischeinrichtungen die Abfallmasse erheblich verdichtet, was eine schlechte Belüftung und Entgasung mit sich bringt. Infolge der technischen Anordnung der Mischeinrichtungen ist es im allgemeinen nicht möglich, den für die aerobe Heißfermentation erforderlichen Sauerstoff fein verteilt in die Rottemasse einzubringen, so daß der Kompostierungsvorgang mehrere Wochen dauert, die Durchsatzmengen gering sind und die bei der aeroben Heißfermentation anfallende Wärme nur unzureichend für eine Beschleunigung des Kompostierungsvorganges ausgenutzt werden kann.

Zur Kompostierung von Küchen-und Gartenabfällen ist es bekannt, Mieten anzulegen, bzw. Kompostbehälter zu verwenden, mit denen die Sauerstoffversorgung der Abfallmasse verbessert und damit die Kompostierungszeit verkürzt werden soll. Bei diesen bekannten Kompostbe hältern erfolgt die Luft-Sauerstoffzufuhr nur sporadisch bzw. über eine sogenannte Kaminwirkung, so daß sich eine Vielzahl anaerober Bereiche ausbildet, die den Kompostierungsvorgang erheblich beeinträchtigen. Bildung von Pilzkulturen und Verlust von Stickstoff ist die Folge. Darüber hinaus ist keine homogene Mischung und ein gleichmäßiger Feuchtigkeitsgehalt des Rottegemischs mit einem Anteil von 50 bis 60% Wasser gegeben. Die Ausnutzung der bei der Kompostierung auftretenden Verrottungswärme erfolgt unkontrolliert, so daß erhebliche Rottezeiten von mehreren Monaten erforderlich sind. Aufgrund dieser langen Verweilzeit in den Kompostbehältern wird nur ein geringer Teil der anfallenden Garten- und Küchenabfälle verrottet, während der überwiegende Teil zu Deponien gebracht wird, wo sich erhebliche Abfallmengen ansammeln.

Aufgabe der vorliegenden Erfindung ist es, ein Verfahren und eine Vorrichtung zum Kompostieren fester und flüssiger organischer Abfälle mittels aerober Heißfermentation zu schaffen, bei denen mit geringen technischen Mitteln und Kosten eine Kompostierung der Abfälle in kürzest möglicher Zeit sichergestellt wird.

Diese Aufgabe wird erfindungsgemäß dadurch gelöst, daß die festen und flüssigen organischen Abfälle in Intervallen durchmischt und während der Durchmischung Luft oder Sauerstoff zugeführt wird.

Die erfindungsgemäße Lösung ermöglicht es, innerhalb kürzester Zeit große Mengen an festen und flüssigen organischen Abfallstoffen zu kompostieren, wobei der maschinelle Aufwand und damit die Betriebskosten äußerst gering gehalten werden.

Eine Vorrichtung zur Durchführung des Verfahrens ist dadurch gekennzeichnet, daß ein ortsveränderlicher Bandelevator vorgesehen ist, der mindestens ein mittels einer Antriebseinrichtung umlaufendes Förderband aufweist, auf dessen Band-Außenfläche von dieser abstehende Mitnehmer angeordnet sind.

Die erfindungsgemäße Vorrichtung zeichnet sich durch einen geringen maschinellen Aufwand aus und stellt gleichzeitig sicher, daß mit einem Bandelevator große Abfallmengen gleichzeitig oder nacheinander bearbeitet werden können, wobei bei der Kompostierung sichergestellt ist, daß keine oder nur geringe anaerobe Bereiche, die die Kompostierung behindern, entstehen und bei einem thermisch abgeschlossenen System die Verrottungswärme zur Beschleunigung des Kompostierungsvorganges beiträgt.

Weitere vorteilhafte Ausgestaltungen sind den Merkmalen der Verfahrensansprüche 2 bis 4 sowie der Vorrichtungsansprüche 6 bis 19 zu entnehmen.

Anhand von in der Zeichnung dargestellten Ausführungsbeispielen soll der der Erfindung zugrundeliegende Gedanke näher erläutert werden. Es zeigen:

Fig. 1 einen Längsschnitt durch einen Kompostierungsbehälter mit darin beweglich angeordnetem Bandelevator;

Fig. 2 einen Schnitt durch den Kompostierungsbehälter gemäß Fig. 1 entlang der Linie A-A;

Fig. 3 einen Querschnitt durch den oberen Teil eines Bandelevators gemäß Fig. 1;

Fig. 4 einen schematischen Querschnitt durch das Förderband des Bandelevators gemäß Fig. 3 im belasteten Zustand;

Fig. 5 bis 7 verschiedene Ausführungsbeispiele für den konstruktiven Aufbau der Förderbänder des Bandelevators;

Fig. 8 bis 10 schematische Darstellungen verschiedener Konfigurationen von Förderbändern des Bandelevators;

Fig. 11 einen Querschnitt durch eine Kompostierungsvorrichtung für Garten-und Küchenabfälle hauptsächlich zur Auffüllung im Bereich von Privatgrundstücken;

Fig. 12 eine Draufsicht auf die Vorrichtung gemäß Fig. 11;

Fig. 13 einen Querschnitt durch eine Vorrichtung zum Kompostieren frei gelagerter organischer Abfälle und

Fig. 14 eine Vorderansicht der Vorrichtung gemäß Fig. 13.

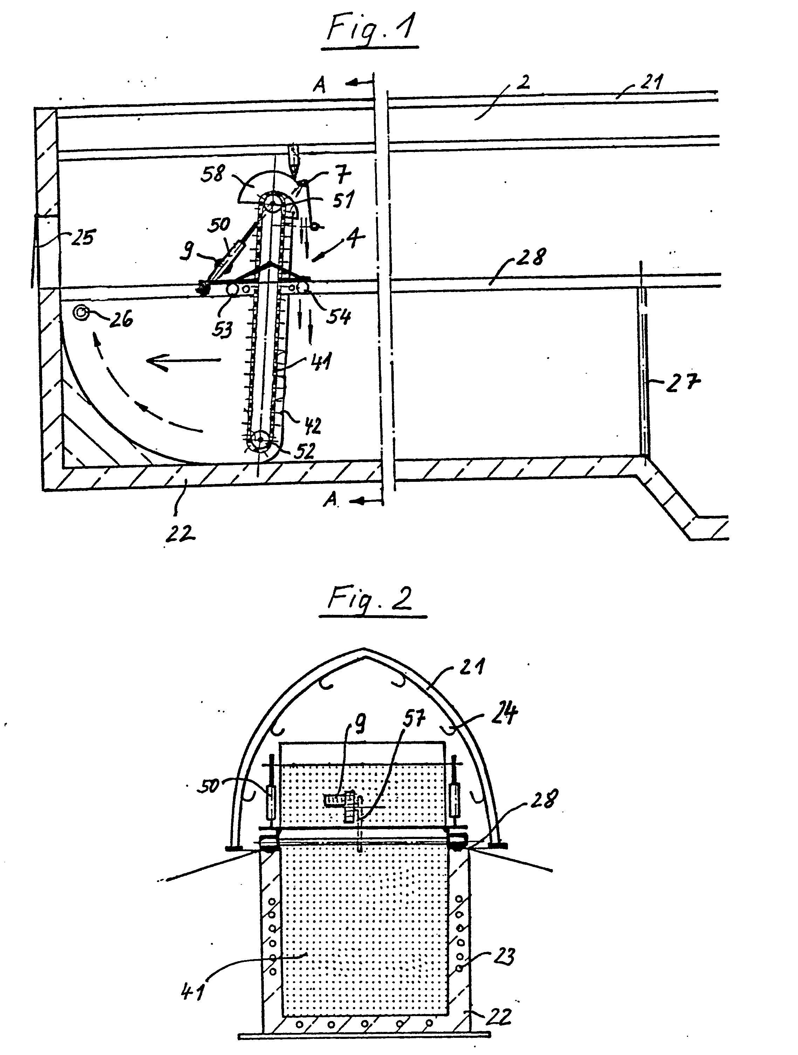

Die in Fig. 1 im Querschnitt dargestellte Vorrichtung zum Kompostieren fester und flüssiger organischer Abfälle dient im wesentlichen dazu, flüssige organische Abfälle, die derzeit zum überwiegenden Teil unbehandelt auf landwirtschaftlich genutzte Flächen aufgebracht werden, unter Zugabe von geeigneten Fest stoffen zu festem Kompost zu fermentieren, wobei der feste Kompost einen hohen Anteil wasserunlöslicher Stickstoffverbindungen als Endprodukt enthält. Zu diesem Zweck wird der flüssige organische Abfall in Form von Gülle bzw. mit einem geringen Anteil an Feststoffen, beispielsweise Stroh, Gartenabfälle o.dgl. in einen nicht näher dargestellten Behälter eingebracht und dort homogen' gemischt und anschließend mittels einer Förderschnecke o.dgl. in den eigentlichen Kompostierungsbehälter 2 gemäß Fig. 1 gedrückt.

Der Kompostierungsbehälter 2 ist vorzugsweise im wesentlichen quaderförmig aufgebaut und weist eine Wandung 22 aus Stahl oder Beton auf. An der einen Stirnseite des Behälters ist zusätzlich eine Klappe 25 zum Einbringen fester organischer Abfälle, beispielsweise Gartenabfälle, sowie eine Öffnung 26 zum Einleiten flüssiger organischer Abfälle wie Gülle oder Jauche vorgesehen. Der Kompostierungsbehälter 2 ist waagerecht oder mit geringer Steigung ebenerdig aufgestellt, so daß sowohl das Beschicken als auch das Entnehmen fertigen Kompostes maschinell oder von Hand ohne weiteres möglich ist.

Der Deckel des Kompostierungsbehälters 2 besteht aus einer ellipsen-oder kreisbogenförmigen Hohlraumabdeckung 21, an deren Innenseite mehrere Ableitrinnen 24 zum Ableiten des mit organischen Säuren angereicherten Kondenswassers vorgesehen sind, so daß der im Kompostierungsbehälter 2 befindlichen Rotte-oder Abfallmasse Wasser entzogen wird, das durch die Heißfermentierung verdunstet und im Bereich der Hohlraumabdeckung 21 gesammelt und über die Ableitrinnen 24 abgeleitet wird.

In Längsrichtung des Kompostierungsbehälters 2 sind im Bereich beider Wandseiten Schienen 28 angebracht, auf denen über Rollen 53 und 54 ein im wesentlichen über die gesamte Strecke des Kompostierungsbehälters 2 verlaufender Bandelevator 4 in Längsrichtung des Kompostierungsbehälters 2 beweglich angeordnet ist. Der im Innenraum des Kompostierungsbehälters 2 angeordnete Bandelevator 4 weist ein um eine obere Bandwelle 51 und eine untere Bandwelle 52 umlaufendes Förderband 41 auf, das von einem Antriebsmotor 9 über einen Riemenantrieb 57 angetrieben wird.

Das Förderband 41 weist eine Vielzahl von senkrecht vom Förderband 41 abstehende Mitnehmer 42 auf, die dazu dienen, die im Kompostierungsbehälter 2 befindliche Rottemasse zu ergreifen und in Förderrichtung des Förderbandes 41 nach oben zu reißen, um die Rottemasse zu durchmischen und im oberen Teil des Bandelevators 4 zu belüftenund im Abstreifvorgang weiter zu zerkleinern. Die Förderrichtung ist in Fig. 1 durch Pfeile eingetragen, wobei in der Darstellung gemäß Fig. 1 der Bandelevator 4 auf der Schiene 28 von rechts nach links bewegt wird. Als Antrieb für die Längsbewegung des Bandelevators 4 kann ebenfalls der Motor 9 dienen, der über eine geeignete Getriebekupplung mit einem Antriebsritzel verbunden ist, das in entsprechende Zahnstangen o.dgl. am Kompostierungsbehälter 2 eingreift.

Im Bereich der oberen Bandwelle 51 des Bandelevators 4 ist eine obere Abdeckung 58 vorgesehen, mittels der die emporgehobene Rottemasse geführt wird und an einem Abstreifer 47 vom Förderband abgehoben wird. Im Bereich der oberen Abdeckung 58 ist eine Belüftungeinrichtung in Form eines Luftzufuhrrohres 7 vorgesehen, mittels der die vom Förderband 41 abgelöste Rottemasse intensiv belüftet wird.

Um zu verhindern, daß frisches Abfallgemisch in den Innenbereich des Bandelevators 4 fällt, ist dieser zusätzlich durch ein nicht näher dargestelltes Abdeckblock sowie durch ein die Stirnseiten des Bandelevators abdeckendes Seitenblech geschützt. Geringe Rotte-oder Abfallgemischreste, die zwischen das Förderband fallen, können im unteren Bereich des Bandelevators wieder herausfallen.

Wie der Darstellung gemäß Fig. 2 zu entnehmen ist, erstreckt sich das Förderband 41 über nahezu die gesamte Breite des Innenraumes des Kompostierungsbehälters 2 und ist in regelmäßigen Abständen mit den Mitnehmern 42 bestückt.

Die Neigung des Bandelevators 4 in Bezug auf die Vorschubbewegung des Bandelevators 4 ist vorzugsweise mittels einer hydraulischen Verstelleinrichtung 50 verstellbar, die an beiden Seitenenden des Bandelevators 4 angeordnet ist (Fig. 2). Mittels der hydraulischen Verstelleinrichtung ist es darüber hinaus möglich, beim Erreichen der Stirnseite des Kompostierungsbehälters 2 den Bandelevator in Bezug auf die Schienenführung 53, 54 um 90° hochzuklappen, so daß der Bandelevator im hochgeklappten Zustand zur anderen Stirnseite des Kompostierungsbehälters 2 zurückgefahren und dort erneut in die Rottemasse abgesenkt werden kann. Somit ist sichergestellt, daß der Bandelevator 4 die im Kompostierungsbehälter 2 befindliche Rottemasse stets in einer bestimmten Vorzugsrichtung durcharbeitet und somit eine optimale Durchmischung und Belüftung sicherstellt.

Der durch die hydraulische Verstelleinrichtung 50 eingestellte vertikale Verstellwinkel bestimmt den Arbeitsvorschub und das Maß, um das die Rottemasse um die Breite des Bandelevators 4 versetzt wird. Damit kann der Vorschub des Bandelevators 4 automatisch der jeweiligen Konsistenz der im Kompostierungsbehälter 2 befindlichen Rottemasse angepaßt werden.

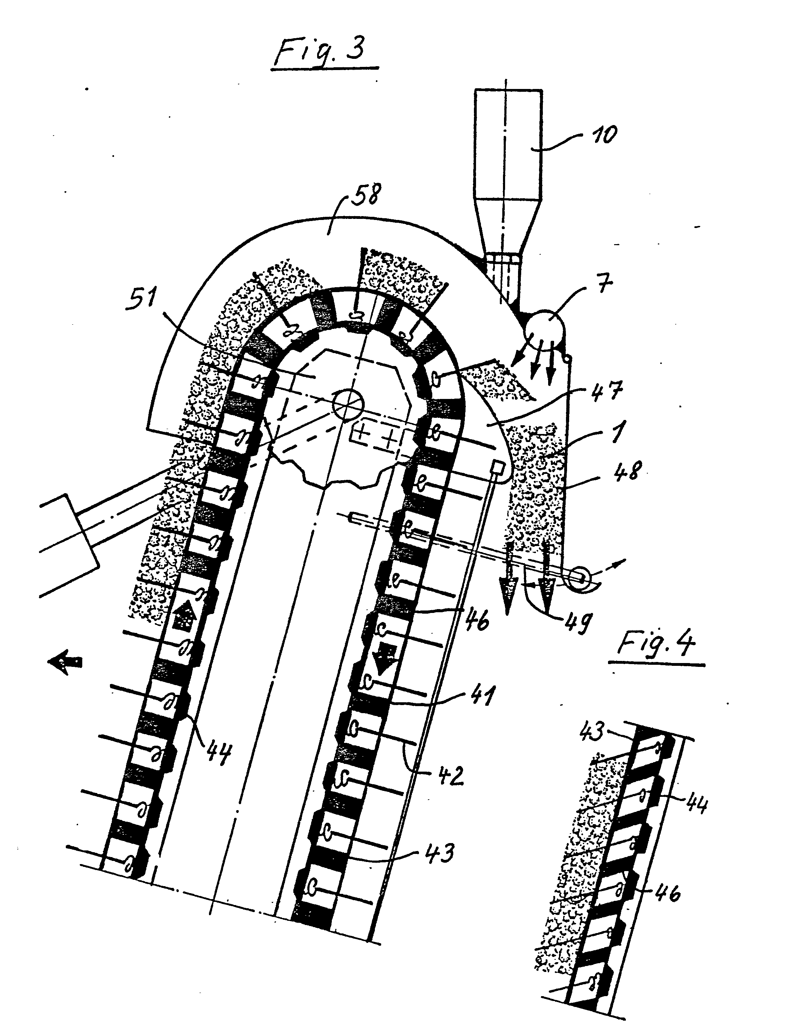

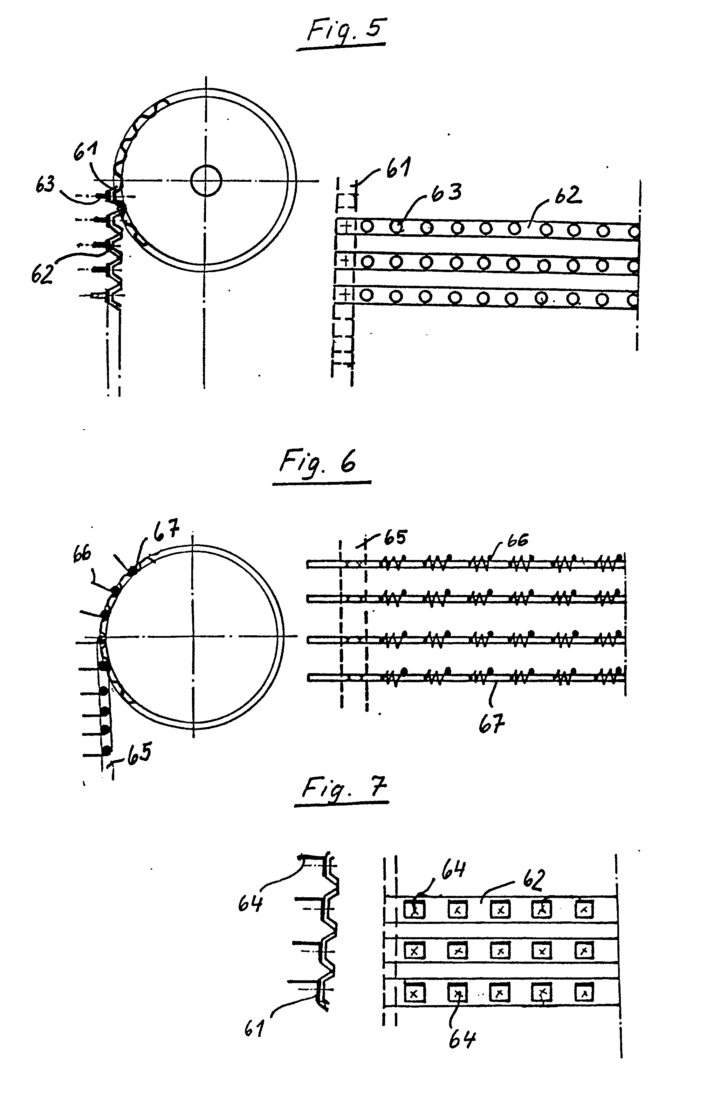

In den Fig. 3 und 4 ist der Aufbau des Bandelevators 4 in verschiedenen Belastungszuständen detailliert dargestellt.

Der Bandelevator 4 besteht im wesentlichen aus einem um die nicht näher dargestellte untere Bandwelle und die obere Bandwelle 51 umlaufenden Förderband 41, das aus einer Doppelbandkette besteht. Der innen verlaufende Teil der Doppelbandkette besteht aus einem Profilband 44, das in seinem Zahnprofil dem Profil der Bandwellen angepaßt ist.

Der äußere Teil der Doppelbandkette besteht aus einem Oberband 43, das mit dem inneren Profilband über Verbindungsstücke 46 verbunden ist; die in gleichen Abständen zwischen dem Oberband 43 und dem Profilband 44 angeordnet sind. In den Lücken zwischen den einzelnen Verbindungsstücken 46 sind die Mitnehmer 42 angeordnet, die im dargestellten Ausführungsbeispiel aus federnd am Profilband 44 befestigten Stahlfedern bestehen. Das Profilband 44, das Oberband 43 und die Verbindungsstücke 46 können aus Gummi oder einem geeigneten Kunststoff hergestellt sein, wie sie im allgemeinen in der Antriebstechnik Verwendung finden. Weitere Ausführungsbeispiele der Doppelbandkette sind den nachstehend beschriebenen Figuren 5 bis 7 zu entnehmen.

Die Mitnehmer 42 ragen so weit über das Oberband 43 hinaus, daß -wie der Darstellung gemäß Fig. 3 zu entnehmen ist -eine bestimmte Menge Rottemasse 1 aufgenommen und in Bewegungsrichtung des Förderbandes 41, die in der Darstellung gemäß Fig. 3 durch die eingetragenen Pfeile angezeigt ist, um die obere Bandwelle 51 transportiert wird.

Das obere Abdeckblech 58 dient zur Aufnahme einer Dosierpumpe 10 sowie der Belüftungsdüse 7. Mittels der Dosierpumpe 10 können dem aufgewirbelten Abfallgemisch 1 Enzyme und/oder Trockenbakterien und/oder Chelatbildner zugeführt werden, während die Luftdüse 7 Sauerstoff oder ein Luftgemisch dem aufgewirbelten Abfallgemisch 1 zuführt.

Das Abfallgemisch 1 bzw. die Rottemasse wird vom Förderband 41 mittels eines Abstreifers 47 bzw. mehrere Abstreifermesser vom Förderband 41 abgehoben und gegen ein Prallblech 48 geworfen, von wo aus es senkrecht zurück in die im Kompostierungsbehälter 2 befindliche Rottemasse fällt.

Das Prallblech 48 ist mittels einer Verstelleinrichtung 49 verstellbar, so daß die Fallrichtung des aufgewirbelten Abfallgemisches 1 in Abhängigkeit von der Neigung des Bandelevators 4 gegenüber der Senkrechten bestimmt werden kann.

Fig. 4 zeigt die Verstellung der Mitnehmer 42 sowie des Oberbandes 43 gegenüber dem Profilband 44 unter Einwirkung einer stärkeren Belastung, woraus deutlich hervorgeht, daß die Neigung der Mitnehmer 42 gegenüber der Senkrechten von der Konsistenz der Rottemasse abhängt, so daß sich bei fester Konsistenz der Rottemasse die Mitnehmer 42 gegenüber der Förderrichtung verstellen, so daß die mitgenommene Menge reduziert wird. Bei geringerer Belastung richten sich die Mitnehmer 42 sowie die Verbindungsstücke 46 wieder rechtwinklig zum Kettenband auf, so daß sich die Menge des mitgenommenen Abfallgemisches 1 wieder erhöht.

Diese belastungsabhängige Ausrichtung der Mitnehmer 42 bzw. Verbindungsstücke 46 stellt sicher, daß auch bei zunehmender Dichte des Abfallgemisches das Förderband bzw. der Bandelevator nicht überlastet werden, so daß in jedem Zustand eine sichere Betriebsweise des Bandelevators 4 gewährleistet ist.

Die Abstreifmesser 47 sind vorzugsweise auf der gesamten Breite des Bandelevators bzw. Förderbandes 41 jeweils zwischen den einzelnen Mitnehmern 42 angeordnet, so daß die Mitnehmer 42 nicht unter Einwirkung der Abstreifer verbogen werden, sondern lediglich das von den Mitnehmern 42 transportierte Abfallgemisch vom Förderband 41 abheben und im geringen Maße das Rottegut weiter zerkleinern und auflockern.

In den Fig. 5 bis 7 sind verschiedene Varianten des Förderbandes 41 dargestellt, die alternativ zu dem Doppelbandkette gemäß Fig. 3 Verwendung finden können.

So kann beispielsweise gemäß Fig. 5 das Förderband aus Stahlgliedern 61 bestehen, auf denen Stabilisierungsquerhalter 62 angeordnet sind, auf denen wiederum Gummifinger 63 befestigt sind. Die Gummifinger 63 sind über die Breite des Förderbandes in gleichmäßigen Abständen angeordnet, so daß zwischen den einzelnen, in gleichen Abständen angeordneten Gummifingern die Abstreifmesser gemäß Fig. 3 verlaufen und die vom Förderband angehobene Rottemasse abstreifen können.

Das in Fig. 5 dargestellte trapezförmige Zahnprofil des im Eingriff mit der Bandwelle stehenden inneren Bandes kann selbstverständlich auch in anderer Form, beispielsweise in Dreieckform oder Halbkreisform ausgebildet sein.

In Fig. 6 ist eine weitere Variante des Förderbandes dargestellt, das aus einer Gummi-Gliederkette 65 besteht, auf der über Stege 67 Federringe 66 mit nach außen stehendem Dorn angeordnet sind.

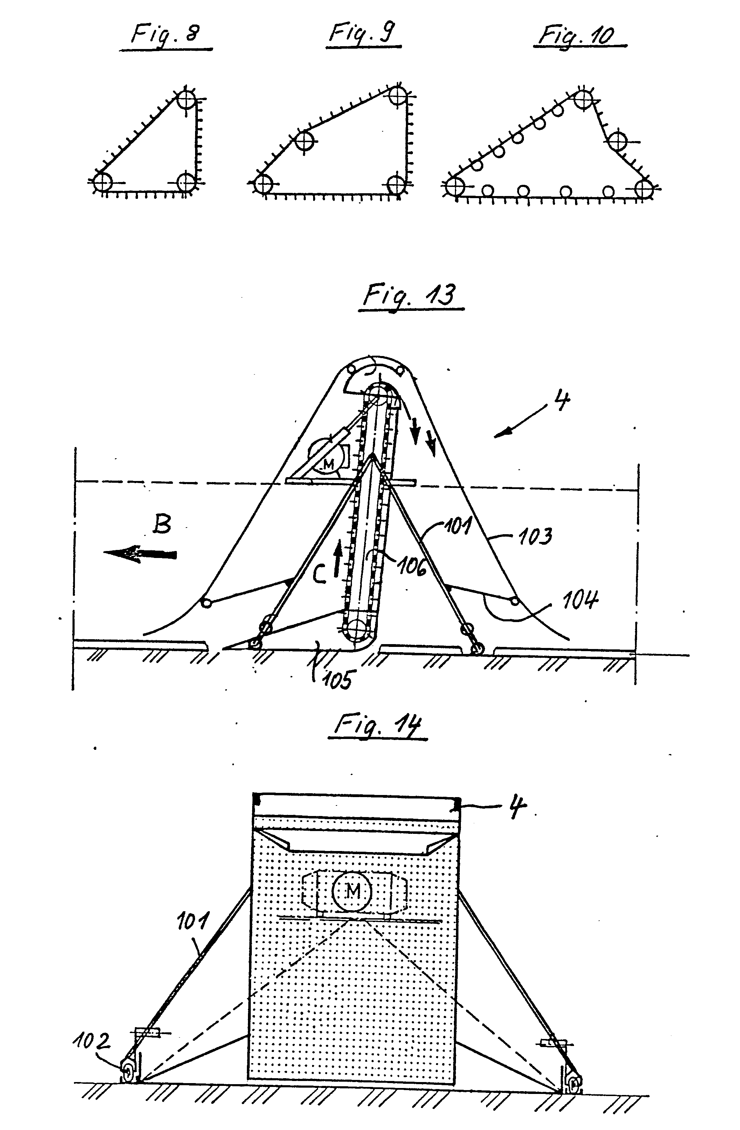

Die in Fig. 7 dargestellte Ausführungsform des Förderbandes entspricht der Ausgestaltung des Förderbandes gemäß Fig. 5 mit der Ausnahme, daß anstelle der Gummifinger 63 Federstahlflacheisen 64 auf den Stabilisierungshaltern 62 angebracht sind.

In beiden Ausführungsformen gemäß den Fig. 6 und 7 sind die als Federstahlflacheisen bzw. Federringe ausgebildeten Mitnehmer in gleichen Abständen auf den Stabilisierungshaltern 62 bzw. 27 angeordnet, so daß in den Zwischenräumen zwischen den Mitnehmern die Abstreifer 47 gemäß Fig. 3 wirksam werden können.

In den Fig. 8 bis l0 sind verschiedene Varianten der Ausgestaltung des Bandelevators dargestellt.

So kommt beispielsweise anstelle eines über zwei Bandwellen geführten Förderbandes auch eine solche Ausgestaltung des Bandelevators in Frage, bei der das Förderband über drei Bandwellen nach Art eines gleichschenkligen Dreiecks geführt ist, wobei die Vorschubrichtung in der Darstellung gemäß Fig. 8 von rechts nach links erfolgt, so daß die im Kompostierungsbehälter befindliche Rottemasse von dem schrägverlaufenden Förderband angehoben wird.

Die Fig. 9 und 10 zeigen weitere Ausführungsbeispiele der Führung des Förderbandes des Bandelevators mit mehreren Umlenkrollen, wobei die jeweilige Form des Bandelevators den spezifischen Bedürfnissen angepaßt werden kann. Selbstverständlich beschränkt sich die Form des Bandelevators bzw. Führung des Förderbandes nicht auf die dargestellten Ausführungsbeispiele, sondern kann in manigfaltiger Weise verwirklicht werden, je nachdem welche geometrischen Voraussetzungen vorliegen und welche Art von Abfallgemisch verarbeitet werden soll.

Nachstehend soll die Arbeits-und Funktionsweise der in den Fig. 1 bis 10 dargestellten Kompostierungsvorrichtung näher erläutert werden.

Das in den Kompostierungsbehälter 2 eingebrachte Abfallgemisch 1 wird von dem Bandelevator 4 von der einen Stirnseite zur anderen Stirnseite des Kompostierungsbehälters 2 durchfahren, wobei das Abfallgemisch 1 mittels der auf dem Förderband 41 angeordneten Mitnehmer 42 emporgehoben und in Bewegungsrichtung hinter dem Bandelevator 4 auf dem Abfallgemisch abgelegt wird. Durch die intervallmäßige Förderung und Durchmischung der Rottemasse bzw. des Abfallgemisches 1 unter Zugabe von Sauerstoff in Form von Luft oder als Gas über die Lufteintrittsdüse 7 wird dem Abfallgemisch in feinverteilter Form Sauerstoff über die gesamte Breite oberhalb des Abstreifers 47 zugeführt, so daß eine lockere Rottemasse entsteht, die sich bis in den thermophilen Bereich von 45°C bis 75°C sehr schnell erhitzt.

Durch die Zugabe von Bakterien in trockener oder flüssiger Form über die Dosierpumpe 10 wird der gesamte Rotteprozeß beschleunigt.

Durch die weitere Zugabe von Enzymen werden die in der Rottemasse befindliche Mikroorganismen in Stressfunktion versetzt, so daß teilweise ihre Zellwände aufbrechen und Zellwasser freigegeben wird, so daß eine schnellere Umwandlung des in der Rottemasse gebundenen Stickstoffes erfolgt. Im übrigen erfolgt der mikrobiologische Abbauprozeß, bei dem der Stickstoff im Zelleiweiß der Mikroorganismen wasserunlöslich festgelegt wird. Dieser Proteinstickstoff wird später beim Aufbringen auf die Bodenflächen bei Temperaturen über 8°C durch weitere mikrobiologische Aktivitäten remineralisiert.

Zur Verbesserung der Steuerung des Prozeßablaufes, der optimal im Bereich um +50°C verläuft, wird durch die in der Wandung des Kompostierungsbehälters gemäß Fig. 2 angeordneten Rohrleitungen 23 Wärme aus dem Innenraum des Kompostierungsbehälters 2 entzogen. Darüber hinaus kann Nutzwärme aus der Hohlraumabdeckung 21 entzogen werden, damit an der Innenseite eine Kältebrücke entsteht, an der sich Kondenswasser absetzt. Dadurch wird eine Verminderung des Wassers erreicht, wobei das mit Biosäuren angereicherte Kondenswasser für einen weiteren, industriellen Verbrauch wirtschaftlich genutzt werden kann.

Durch die einstellbare Arbeits-oder Vorschubgeschwindigkeit des Bandelevators 4 sowie infolge des geringen Versetzens des Abfallgemisches bzw. der Rottemasse erfolgt ein kontinuierlicher Versatz der Rottemasse um ca. 25 cm pro Arbeitsgang in Richtung auf die Entleerungsklappe 27 gemäß Fig. 1.

Hat der Bandelevator 4 einen Kompostierungsbehälter 2 durchgearbeitet, so wird er an der Stirnseite des Kompostierungsbehälters 2 angehoben und für einen erneuten Durchmischvorgang zur anderen Stirnseite zurückgefahren oder bei mehreren parallel oder in Reihe angeordneten Kompostierungsbehältern 2 aus dem betreffenden Kompostierungsbehälter 2 herausgenommen und in einen anderen Kompostierungsbehälter 2 eingefahren. Auf diese Weise kann die maschinelle Einrichtung des Bandelevators 4 bei großen Mengendurchsätzen sehr wirtschaftlich genutzt werden.

Die aus der Entleerungsklappe 27 entnommene fertige Rottemasse bzw. der Kompost kann mitttels eines Förderbandes auf einen Düngewagen transportiert und dann im Streuverfahren auf zu düngende Bodenflächen aufgebracht werden.

Das erfindungsgemäße Kompostierungsverfahren sowie die Vorrichtung zur Kompostierung fester und flüssiger organischer Abfälle ermöglicht somit, in mehreren hintereinandergeschalteten Kompostierungsbehältern große Menge flüssiger organischer Abfälle in Form von Gülle, feste organische Abfälle in Form von zerkleinerten Gartenabfällen oder sonstige pflanzliche Rückstände ohne Zwischenlagerung zu wertvollem Dünger zu verarbeiten. Dazu ist lediglich die Anlage eines oder mehrere Kompostierungsbehälter erforderlich, in denen ein einzelner Bandelevator umlaufen und für die Durchmischung, Förderung und Belüftung der in dem Kompostierungsbehälter eingebrachten Rottemasse ausreichend ist.

Somit ist eine Zwischenlagerung von Rohgülle nur in kleinen Behältern erforderlich, die ohnehin bei jeder Massentierhaltung vorhanden sind. Durch Anreicherung und das Erzielen von Proteinstickstoffen wird ein Abschwemmen von Nitraten und damit ein Anreichern des Grundwassers mit Nitraten unterbunden, so daß das erfindungsgemäße Kompostierungsverfahren in hohem Maße umweltfreundlich ist.

Bei der Heißfermentierung bzw. Kompostierung kann zusätzlich die bei der Verrottung anfallende Prozeßwärme wirtschaftlich genutzt werden.

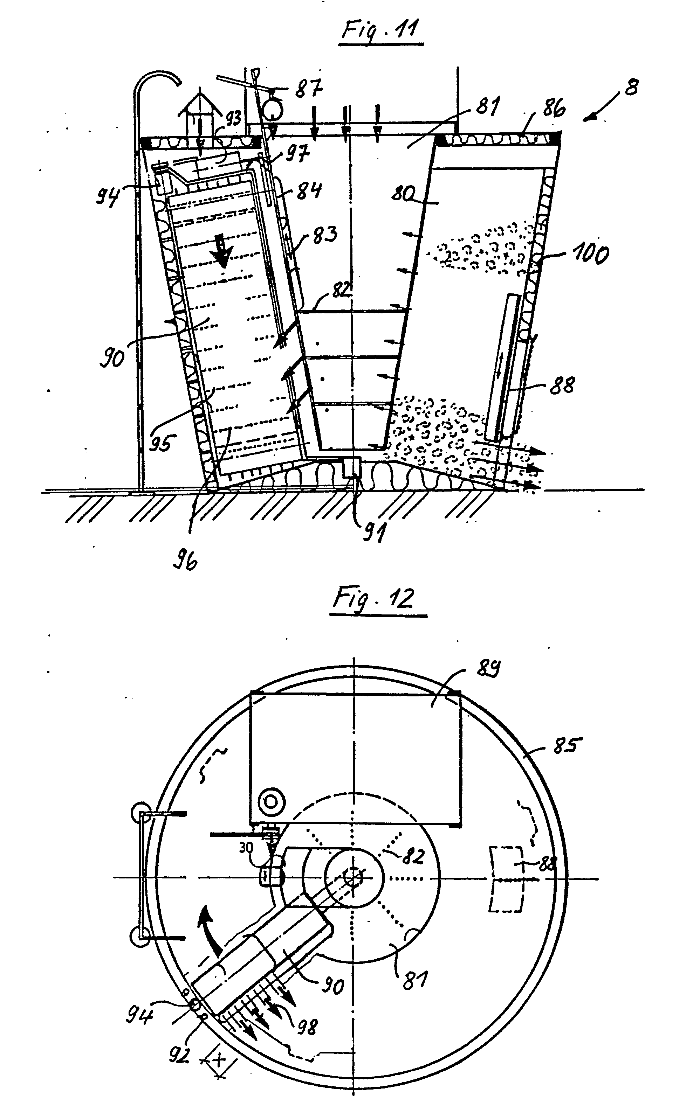

Die in den Fig. 11 und 12 dargestellte Vorrichtung zur Kompostierung fester und flüssiger organischer Abfälle eignet sich insbesondere für kleinere Abfallmengen und kann somit wirtschaftlich in Gartenbaubetrieben o.dgl. eingesetzt werden.

Die in den Fig. 11 und 12 dargestellte Kompostierungsvorrichtung dient im wesentlichen zur Verrottung verrottbarer Kohlenstoffträger, insbesondere Garten-und Küchenabfälle unter Zugabe von Stickstoffträgern wie Gülle, Klärschlamm oder Flüssigstickstoff. Der Verrottungsvorgang entspricht der vorstehend beschriebenen Heißverrottung bzw. aeroben Fermentation.

Die Kompostierungsvorrichtung 8 weist eine im wesentlichen trichterförmig ausgebildeten Innenbehälter 81 auf, um den ein Bearbeitungs-oder Rottebehälter 80 angeordnet ist. Der trichterförmige Innenbehälter 81 weist an seiner Wandung über den Umfang verteilte Löcher 82 sowie einen oder mehrere mittels eines Schiebers 84 verschließbaren Schlitz 83 auf, der zu dem Bearbeitungs-oder Rottebehälter 80 führt.

An der Außenseite des Bearbeitungsbehälters 80 ist an einer vorgegebenen Stelle eine Entleerungsstelle 85 vorgesehen, aus der der fertige Kompost in geringer Menge, bei jedem Arbeitsvorgang des Bandelevators herausfällt.

Im Bearbeitungsbehälter 80 ist analog zu dem Ausführungsbeispiel in den Fig. 1 und 2 ein Bandelevator 90 angeordnet, der in dem Bearbeitungsbehälter 80 umläuft. Der Bandelevator 90 ist einerseits auf einem Lager 91 gelagert, das unterhalb des Innenbehälters 81 angeordnet ist und andererseits auf Stützrädern 92 gelagert, die in einer am Umfang des Bearbeitungsbehälters 80 angeordneten Schiene 85 umlaufen. Die Vorschubbewegung des Bandelevators 90 wird mittels eines auf der Oberseite des Bandelevators 90 angeordneten Motors 93 bewirkt, der über ein entsprechendes Getriebe oder unmittelbar mit einem Antriebsrad 94 verbunden ist.

Analog zu dem in dem vorbeschriebenen Ausführungsbeispiel erläuterten Bandelevator weist der Bandelevator der Ausführungsform gemäß den Figuren 11 und 12 ein Förderband 95 auf, auf dem eine Vielzahl von Mitnehmern 96 befestigt sind. An der Oberseite des Bandelevators 90 ist eine Abdeckhaube 97 vorgesehen, die das angehobene Rottematerial umlenkt und zu einem ebenfalls an der Oberseite des Bandelevators vorgesehenen Abstreifer 98 leitet.

Der Abstreifer 98 hebt das emporgehobene Rottematerial vom Förderband 95 ab und lagert es in Arbeitsrichtung des Bandelevators 90 hinter dem Bandelevator 90 ab, so daß es auf diese Weise zerkleinert und aufgelockert wird.

Eine oberhalb des Abstreifers 98 angeordnete Luftdüse 99 dient zur intensiven Belüftung des vom Bandelevator 90 angehobenen und gelockerten Rottematerials, wobei die Luftdüse 99 sich mit einer oberen Abdeckung 86 der Kompostierungsvorrichtung mitdreht.

Die Außenwand des Außenbehälters 80 ist mit einer Isolierschicht 100 versehen, die dafür sorgt, daß die Prozeßwärme für den Rottevorgang erhalten bleibt, um den Rotteprozeß zu beschleunigen und die Vorwärmung der Frischrotte zu gewährleisten.

Die Zufuhr von Gülle oder anderen Stickstoffträgern aus dem oberhalb des Innenbehälters 81 angeordneten Stickstofftanks 89 erfolgt über einen Schnellschieber 87, durch den je nach Bedarf Stickstoff in den Innenbehälter 81 eingefüllt werden kann.

Nachstehend soll die Funktionsweise der Kompostierungsvorrichtung gemäß den Figuren 11 und 12 näher erläutert werden.

Das in den trichterförmigen Innenbehälter 81 eingefüllte frische Kompostmaterial wird durch die am Umfang des Innenbehälters 81 angeordneten Löcher 82 und durch den Wandkontakt mit dem Außenbehälter 80 vorgewärmt und begast. Durch den Schlitz 83 gelangt das Rottematerial aus dem Innenbehälter 81 in den Bearbeitungs-oder Rottebehälter 80, wobei die jeweilige Menge des in den Bearbeitungsbehälter gelangende Material durch den Schieber 84 verändert werden kann. Der Bandelevator 90 bewegt sich in seiner Schräglage kreisförmig um den Mittelpunkt der Kompostierungsvorrichtung und versetzt dabei das Abfallgemisch um einen jeweils vorgebbaren Vorschub X gemäß Fig. 12. Die Bewegungsrichtung des Bandelevators verläuft dabei im Uhrzeigersinn im Innenraum des Außenbehälters 80.

Das in den Innenbehälter von oben nach unten nachgefüllte frische Abfallmaterial gelangt jeweils durch den Schlitz 83 in den beim Fördervorgang hinter dem Bandelevator entstehenden Hohlraum und gelangt somit in den eigentlichen Rotteraum. Nach einigen Tage gelangt infolge des Mischvorganges entgegengesetzt zur Arbeitsrichtung des Bandelevators 90 das durchmischte und belüftete Rottematerial bis zur Entleerungsstelle 88. Durch die geneigte Anordnung bzw. Kegelstumpfform der Kompostierungsvorrichtung gelangt das Rottematerial im freien Fall aus dem Innenbehälter auf den anschließenden Boden und kann von dort per Hand entnommen werden. Die austretende Fertigrotte ist dabei mengenmäßig durch den Schieber an der Entnahmestelle 86 zu regeln.

Die intensive Belüftung des Rottematerials erfolgt durch die mit dem Bandelevator 90 umlaufende Luftdüse 99, wobei sich die obere Abdeckung 86 mit dem Bandelevator 90 mitdreht.

In den Fig. 13 und 14 ist eine weitere Ausführungsform der Kompostierungsvorrichtung dargestellt, die sich insbesondere für Abfallmieten eignet, die frei ohne speziellen Kompostierungsbehälter gelagert werden.

Auch bei der in den Fig. 13 und 14 dargestellten Vorrichtung findet ein Bandelevator 4 der vorstehend beschriebenen Art Verwendung, der auf Stützen 101 gelagert ist, die auf Schienen 102 geführt sind. Zur Erhaltung der Verrottungswärme ist eine Abdeckplane 103 vorgesehen, die einerseits am Kopfende des Bandelevators aufliegt und andererseits über Abstandshalter 104 an den Stützen 101 gelagert ist.

Die Vorschubrichtung des Bandelevators 4 ist durch die Pfeilrichtung B in Fig. 13 dargestellt, während Transportrichtung des Förderbandes des Bandelevators 4 durch Pfeile C angedeutet ist. Das vom Bandelevator 4 angehobene Rottematerial wird analog zu den vorstehend beschriebenen Ausführungsbeispielen durchmischt, verwirbelt und im Bereich des oberen Abdeckbleches belüftet und fällt anschließend entsprechend den Pfeilrichtungen D auf die Rottemasse.

Um analog zur Kompostierungsvorrichtung gemäß Fig. 1 zu verhindern, daß frisches Abfallgemisch in den Innenbereich des Bandelevators fällt, ist dieser durch ein Abdeckblech 105 und ein Seitenblech 106 geschützt. Geringe Abfallgemischreste, die zwischen das Förderband gelangen, können im unteren Bereich des Bandelevators wieder herausfallen.

Die vorstehend beschriebene Ausführungsform einer Kompostierungsvorrichtung eignet sich für beliebig große Mieten, wobei lediglich sichergestellt werden muß, daß in Abhängigkeit von der Vorschubgeschwindig keit des Bandelevators eine ausreichende aerobe Fermentation der Rottemasse ermöglicht wird.

Die vorstehend anhand von drei verschiedenen Ausführungsbeispielen beschriebene Kompostierungsvorrichtung kann in manigfaltiger Weise modifiziert werden. Wesentlich bei der erfindungsgemäßen Vorrichtung ist, daß durch regelmäßiges Durchmischen und Belüften unter eventueller Zugabe von Trockenbakterien oder Enzymen in geringstmöglicher Zeit ein Maximum an Abfallstoffen verarbeitet wird und hochwertiger Kompost gewonnen wird. Durch die wesentliche Verringerung der Rottezeit gegenüber herkömmlichen Vorrichtungen und Verfahren kann die Belastung von Mülldeponien erheblich verringert werden und darüber hinaus durch die Wiederverwendbarkeit des gewonnen Humus eine erhebliche Kosteneinsparung erzielt werden. Das Aufbringen von Kunstdünger und Torf auf zu kultivierende Böden kann dabei weitgehend unterbleiben, da die Nährstoffe im Gegensatz zum normalen Komposthaufen in der Rottemasse erhalten werden.

Durch das Recycling von Garten-und Haushaltsabfällen sowie zerkleinerten Friedhofsabfällen, Reinigungsgut aus Straßengullys, Grassoden von Straßenseitenrändern, Strohhäcksel, Weinbergabfällen o. ä. und deren schadlose Wiederverwendung wird ein wesentlicher Beitrag zur Umweltentlastung geleistet.

**Ansprüche**

1. Verfahren zum Kompostieren fester und flüssiger organischer Abfälle, insbesondere pflanzlicher Feststoffabfälle, Tierdung, Flüssigmist, Klärschlamm o.dgl. durch aerobe Fermentation, wobei die festen und flüssigen organischen Abfälle unter Zufuhr von Luft oder Sauerstoff in wiederverwendbare feste Düngemittel umgesetzt werden, dadurch gekennzeichnet, daß die festen und flüssigen organischen Abfälle in Intervallen durchmischt und während der Durchmischung Luft oder Sauerstoff zugeführt wird.

2. Verfahren nach Anspruch 1, dadurch gekennzeichnet, daß die Durchmischung der festen und flüssigen organischen Abfälle in regelmäßigen Intervallen erfolgt.

3. Verfahren nach Anspruch 2, dadurch gekennzeichnet, daß zyklisch jeweils ein Teil der festen und flüssigen organischen Abfälle durchmischt und belüftet bzw. begast wird.

4. Verfahren nach einem der vorstehenden Ansprüche, dadurch gekennzeichnet, daß die festen und flüssigen organischen Abfälle durch Anheben aus dem Abfallgemisch und Ablagern der angehobenen Abfälle auf dem Abfallgemisch durchmischt werden.

5. Vorrichtung zur Durchführung des Verfahrens nach den vorstehenden Ansprüchen 1 bis 4, dadurch gekennzeichnet, daß ein ortsveränderlicher Bandelevator (4) vorgesehen ist, der mindestens ein mittels einer Antriebseinrichtung (9) umlaufendes Förderband (41) aufweist, auf dessen Band-Außenfläche von dieser abstehende Mitnehmer - (42) angeordnet sind.

6. Vorrichtung nach Anspruch 5, dadurch gekennzeichnet,daß das Förderband (41) des Bandelevators (4) gegenüber der Vorschubrichtung des Bandelevators (4) einen mittels einer Verstelleinrichtung (50) veränderbaren Winkel einschließt.

7. Vorrichtung nach Anspruch 6, dadurch gekennzeichnet, daß das Förderband (41) um mindestens zwei Bandwellen (51, 52) umläuft, von denen eine obere Bandwelle (51) mit der Verstelleinrichtung (50) verbunden ist, mit der die Neigung des Bandelevators (4) in Bezug auf die Vertikale zur Vorschubrichtung des Bandelevators (4) einstellbar ist.

8. Vorrichtung nach Anspruch 5, dadurch gekennzeichnet, daß im Bereich der oberen Bandwelle (51) eine aus mehreren parallelen Abstreifmessern bestehender Abstreifer (47) angeordnet ist, der das von den Mitnehmern (42) angehobene Abfallgemisch (1) abstreift.

9. Vorrichtung nach Anspruch 8, dadurch gekennzeichnet, daß im Bereich des Abstreifers (47) mindestens eine Luft-oder Gasaustrittsdüse (7) angeordnet ist.

10. Vorrichtung nach Anspruch 8 oder 9, dadurch gekennzeichnet, daß die Düsen (7) vornehmlich zwischen dem Abstreifer (47) und einem Prallblech (48), gegen das das abgestreifte Rottegemisch (1) gedrückt wird und/oder im Bereich der Rottefallstrecke, bis zur Höhe der Fahrvorrichtung (28) angeordnet sind.

11. Vorrichtung nach einem der vorstehenden Ansprüche 5 bis 10, dadurch gekennzeichnet, daß die Vorschubgeschwindigkeit des Bandelevators (4) und/oder die Neigung des Bandelevators (4) in Abhängigkeit von der Konsistenz des Abfallgemisches (1) veränderbar ist.

12. Vorrichtung nach Anspruch 5, dadurch gekennzeichnet, daß das Förderband (41) aus einer Doppelbandkette besteht, die ein inneres, an den Bandwellen (51, 52) anliegendes Profilband (44), ein Oberband (43), das Oberband (43) und die das Profil (44) verbindende Verbindungsstücke - (46) und zwischen den Verbindungsstücken angeordnete, als Stifte ausgebildete Mitnehmer (42) aufweist.

13. Vorrichtung nach Anspruch 12, dadurch gekennzeichnet, daß das Profilband (44), das Oberband (43) und die Verbindungsstücke - (46) elastisch sind.

14. Vorrichtung nach Anspruch 12 oder 13, dadurch gekennzeichnet, daß die Mitnehmer (42) als Stahlstifte ausgebildet sind, die an dem Profilband (44) federelastisch befestigt sind.

15. Vorrichtung nach Anspruch 5, dadurch gekennzeichnet, daß das Förderband aus Stahlgliederketten (61) besteht, auf denen Stabilisierungsquerhalter (62) befestigt sind, auf denen als Mitnehmer Gummifinger (63) bzw. Federstahl-Flacheisen (64) angeordnet sind.

16. Vorrichtung nach einem der vorstehenden Ansprüche 5 bis 15, dadurch gekennzeichnet, daß am oberen Ende des Bandelevators (4) ein Leitblech (58) angeordnet ist, oberhalb dessen eine Dosierpumpe (10) vorgesehen ist, die dem aufgewirbelten Abfallgemisch (1) Enzyme, Chelatbildner und/oder Trockenbakterien zuführt.

17. Vorrichtung nach einem der vorstehenden Ansprüche,
dadurch gekennzeichnet, daß der Bandelevator (4) mit einem im Bodenbereich angeordneten Abdeckblech (105) sowie einem die Stirnseiten des Bandelevators (4) abdeckenden Seitenblech (106) versehen ist.

18. Vorrichtung nach einem der vorstehenden Ansprüche 5 bis 17 für einen Kompostierungsbehälter, in dessen Innenraum der Bandelevator beweglich angeordnet ist,
dadurch gekennzeichnet, daß der Kompostierungsbehälter (2) allseitig geschlossen ist, daß die obere Deckfläche (21) des Kompostierungsbehälters kuppelförmig ausgebildet ist und an ihrer Innenseite Leitbleche (24) nach Art einer Regenrinne zum Einsammeln von Kondenswasser aufweist, daß an einer Stirnseite des Kompostierungsbehälters (2) eine Klappe (25) zum Einbringen von festen Abfällen sowie eine oder mehrere Öffnungen (26) zum Einbringen flüssiger Abfallstoffe vorgesehen und daß im Bereich der entgegengesetzten Stirnseite des Kompostierungsbehälters (2) eine Entnahmeklappe (27) vorgesehen ist.

19. Vorrichtung nach einem der vorstehenden Ansprüche 5 bis 17,
dadurch gekennzeichnet, daß der Kompostierungsbehälter aus einem trichterförmigen Innenbehälter - (81) be steht, um den ein geneigt angeordneter Bearbeitungsbehälter (80) angeordnet ist, der mit dem trichterförmigen Innenbehälter (81) über einen veränderbaren Schlitz (83) sowie mehrere über den Umfang verteilte Löcher (82) verbunden ist, daß der Bandelevator (90) im Bearbeitungsbehälter umläuft, daß an der Oberseite des Bandelevators - (90) eine Abdeckhaube (97) vorgesehen ist, die das angehobene Rottematerial umlenkt und zu einem ebenfalls an der Oberseite des Bandelevators (90) vorgesehenen Abstreifer (98) leitet und daß oberhalb des Abstreifers (98) eine Luftdüse (99) angeordnet ist, die sich mit einer oberen Abdeckung - (86) des Kompostierungsbehälters (8) mitdreht.

0 233 637

Fig. 1

Fig. 2

Fig. 3

Fig. 4

## Fig. 5

## Fig. 6

## Fig. 7

Fig. 8    Fig. 9    Fig. 10

Fig. 13

B    101    103

C    106

104

105

Fig. 14

4

101

102

M

_Fig. 11_

_Fig. 12_